# EUROPÄISCHE PATENTSCHRIFT

(11) **EP 2 595 821 B1**
(45) Veröffentlichungstag und Bekanntmachung des Hinweises auf die Patenterteilung: **09.09.2015**
(21) Anmeldenummer: 11748297.6
(22) Anmeldetag: 11.07.2011
(51) Int. Cl.: B60C 23/00, G01B 11/22, G01L 17/00

(54) **VORRICHTUNG UND VERFAHREN ZUM MESSEN VON REIFENPARAMETERN EINES FAHRZEUGS**
SYSTEM AND METHOD FOR MEASURING PARAMETERS OF A VEHICLE TIRE
SYSTEME ET METHODE DE MESURE DE PARAMETRES D'UN PNEUMATIQUE DE VEHICULE

(30) Priorität: 09.07.2010 DE 102010026729
(43) Veröffentlichungstag der Anmeldung: 29.05.2013
(73) Patentinhaber: MAHA Maschinenbau Haldenwang GmbH & Co. KG, 87490 Haldenwang (DE)
(72) Erfinder: SCHÄFER, Frank, 79808 Weilheim (DE)
(74) Vertreter: Behrmann, Niels
(86) Internationale Anmeldenummer: PCT/EP2011/061758
(87) Internationale Veröffentlichungsnummer: WO 2012/004411

(56) Entgegenhaltungen:
- WO-A1-2006/003467
- DE-A1-102007 054 156
- US-A1- 2005 210 968

## Beschreibung

Die vorliegende Erfindung betrifft eine Vorrichtung zum Messen von Reifenparametern eines Fahrzeugs nach dem Oberbegriff des Hauptanspruchs sowie ein Verfahren zum Messen und Ausgeben von Reifenparametern eines Fahrzeugs.

Aus dem Stand der Technik sind zahlreiche Vorgehensweisen bekannt, wie, insbesondere im Zusammenhang mit LKW-Flotten oder dergleichen größerer Anzahl von Fahrzeugen und Fahrzeugreifen, Reifenparameter in Form eines jeweiligen Reifendrucks und einer Reifenprofiltiefe zu messen sind.

So ist es etwa im erwähnten gewerblichen Zusammenhang von LKW-Flotten üblich, die Reifenparameter periodisch, z.B. vierteljährlich, im Rahmen sogenannter Fleet-Checks, also flottenbezogener, typischerweise von Dienstleistern ausgeführter Messroutinen, zu prüfen, wobei in ansonsten bekannter Weise hier durch in der Regel manuell an das Reifenventil angesetzte Messgeräte ein Reifendruck erfasst wird und parallel durch Sicht- bzw. Lehrenprüfung eine Überprüfung der Reifenprofiltiefe erfolgt. Nicht nur aufgrund der gesetzlichen Vorgaben finden derartige Überprüfungen regelmäßig statt, auch nutzen gerade gewerbliche Betreiber von LKW-Flotten die Möglichkeit, durch regelmäßige Überprüfung des Reifenluftdrucks sicherzustellen, dass ein den Treibstoffverbrauch optimierender Mindest-Luftdruck aufrecht erhalten bleibt.

Die Ergebnisse der auf die vorbeschriebene Weise typischerweise manuell ermittelten Reifenparameter werden dann in Form von ansonsten bekannten Messprotokollen zugänglich gemacht und insbesondere auch im Rahmen größerer LKW-Flotten datentechnisch verarbeitet. Gleichwohl ist auch der Aufzeichnung dieser Daten ein manuelles Element gemeinsam, verbunden mit den stets möglichen Unwägbarkeiten einer Daten-Fehlerfassung von Aufzeichnungs- und Übertragungsfehlern.

Die aus dem Stand der Technik bekannte, manuell gestützte Vorgehensweise zur Messung, Aufzeichnung und Aufbereitung von Reifenparametern eines Fahrzeugs eröffnet, neben der erwähnten Fehlerproblematik bei der Messwert-Aufzeichnung, zahlreiche weitere Verbesserungspotentiale: Zum einen hat sich als Grundlage der vorliegenden Erfindung herausgestellt, dass die typischen Fleet-Check-Intervalle im Hinblick auf das optimierte Abfahren eines (LKW-) Fahrzeugsreifenprofils ungenügend sind; so würde etwa, wenn zu einem Überprüfungstermin erkennbar ist, dass eine noch vorhandene Profiltiefe voraussichtlich nicht geeignet ist, bis zum nächsten planmäßigen Überprüfungstermin noch die gesetzlich vorgesehene Mindestprofiltiefe zu halten, das unmittelbare Wechseln des Fahrzeugreifens ausgelöst werden. Entsprechend ist die diesbezügliche Ressourcenausnutzung suboptimal. Zum anderen hat sich, im Hinblick auf den Reifendruck eines Fahrzeugreifens, herausgestellt, dass die Überprüfungsintervalle eines Fleet-Checks ungeeignet sind, um den Reifendruck stets auf einem optimalen Pegel zu halten, so dass typischerweise Fahrzeugreifen stets eine Zeit mit (verbrauchsschädlichem) Unterdruck fahren. Gleichzeitig verbieten es die mit einem Fleet-Check verbundenen Kosten, diesen häufiger (d.h. in kürzeren Intervallen) durchzuführen; maßgeblich dabei sind nicht nur die für einen jeweiligen Dienstleister aufzuwendenden Kosten, sondern insbesondere auch die erforderlichen Standzeiten, da zum Zeitpunkt des Fleet-Check das Fahrzeug (typischerweise mit weiteren Fahrzeugen derselben Flotte) nicht nutzbar an einen vorgesehen Ort gebunden ist.

Eine Vorrichtung zum Messen von Reifenparametern eines Fahrzeugs nach dem Oberbegriff des Hauptanspruchs ist aus der WO 2006/003467 A1 bekannt. Aus dieser Druckschrift sind insbesondere auch Ansätze erkennbar, verschiedene Messvorgänge zu integrieren und es prinzipiell zu ermöglichen, dass durch ein Ab- bzw. Überfahren von einzelnen Sensoren verschiedene Reifenparamter festgestellt werden können.

Aus dem Stand der Technik sind ferner punktuelle Lösungen bekannt, die traditionelle, weitgehend manuelle Messung der Reifenparameter zu automatisieren. So wurde etwa für die Anmelderin in Form des europäischen Patentes 1 952 092 eine Vorrichtung zur Messung und Erfassung einer Profiltiefe eines Fahrzeugreifens beschrieben und geschützt, welches beim Überfahren einer Messanordnung bereits die zur bestimmungsgemäßen Profiltiefeerfassung notwendigen Parameter aufnimmt und daraus einen Profiltiefewert ermittelt. Hierbei handelt es sich allerdings um eine isolierte Speziallösung, welche speziell für den fließenden Verkehr genutzt wird und etwa Überwachungsbehörden Reifenprofiltiefeinformationen anbietet.

Nach wie vor fehlt es jedoch an einem integrierten System, welches insbesondere das Potential bietet, das vorbeschriebene traditionelle Vorgehen eines Fleet-Checks effizienter, ohne Stillstandszeiten der beteiligten LKW, flexibler im Hinblick auf die Luftdruck- und Profiltiefeerfassung sowie ressourcenschonend, betreffend Kraftstoffverbrauchssenkung und das optimale Ausnutzen etwa von Reifenprofilen eines Fahrzeugreifens, zu gestalten.

Aufgabe der vorliegenden Erfindung ist es daher, eine Vorrichtung zum Messen und Ausgeben von Reifenparametern eines Fahrzeugs zu schaffen, welche die Nachteile des aus dem Stand der Technik bekannten Fleet-Check-Systems überwindet, insbesondere flexibel und zeitnah, unabhängig von vorbestimmten Flottenstützpunkten und mithin ohne die Notwendigkeit langer Stillstandszeiten, das Erfassen von Reifenparametern in Form des Reifendrucks und der Reifenprofiltiefe gestattet und entsprechend ad hoc den Fahrzeugführer und/oder sonstigen Beteiligten, etwa einem Flottenmanager einer Fahrzeugflotte, die gemessenen Reifenparameter in Form von Daten zur Verfügung stellt, die eine kurzfristige Reaktion ermöglichen. Diese Reaktion könnte dann insbesondere auch das situative Austauschen eines Fahrzeugsreifens und/oder das Erhöhen eines Reifendrucks durch die Luftzufuhr bedeuten, sollte als Ausgabe der vorliegenden Vorrichtung eine vorbestimmte Schwelle eines Reifenparameters über- bzw. unterschritten werden. Auch soll aufgabengemäß keine aufwendige oder impraktikable Umrüstung oder Vorrüstung eines Fahrzeugs notwendig werden, vielmehr soll das Fahrzeug, so wie es ist, der aufgabengemäßen Reifenparametermessung zugänglich sein.

Die Aufgabe wird durch die Vorrichtung mit den Merkmalen des Hauptanspruchs sowie das Verfahren nach dem unabhängigen Patentanspruch 15 gelöst; vorteilhafte Weiterbildungen der Erfindung sind in den Unteransprüchen beschrieben. Im Rahmen der vorliegenden Erfindung gelten insbesondere auch die weiterbildungsgemäß angegebenen Funktionsmerkmale der Vorrichtung als weiterbildende Verfahrensschritte für das erfindungsgemäße Verfahren offenbart und beansprucht.

Vorteilhaft sind im Rahmen der Erfindung Mittel zum Erfassen eines Reifendrucks des Fahrzeugs sowie Mittel zum Erfassen einer Reifenprofiltiefe des Fahrzeugs vorgesehen, welche synergistisch so zusammenwirken, dass diese bei einem sich bewegenden Fahrzeug, bevorzugt während desselben Bewegungs- bzw. Überfahrvorgangs einer geeigneten Messanordnung durch das Fahrzeug, das Erfassen vornehmen. Dabei wird zum einen vorteilhaft erreicht, dass das mit den Fahrzeugreifen als Messobjekte versehene Fahrzeug für den Messvorgang nicht stillstehen muss, vielmehr ist das Messen beider Reifenparameter Reifendruck und Reifenprofiltiefe während eines (gemeinsamen) Bewegungs- bzw. (Über-)Fahrvorgangs ermöglicht. Dies bedeutet wiederum, dass keine Bedienperson außerhalb des Fahrzeugs notwendig ist, um etwa einen Reifendruck-Messschlauch, wie beim traditionellen Stand der Technik erforderlich, anzulegen oder mittels einer Schablone eine Profiltiefe zu messen. Die Erfindung gestattet vielmehr, dass lediglich durch geeignetes Überfahren einer geeigneten Messanordnung die Parameter erfasst werden und dem Fahrzeugführer direkt oder mittelbar, mittels der erfindungsgemäß vorgesehenen Datenübertragung, zugänglich gemacht werden.

Zusätzlich vorteilhaft im Rahmen der Erfindung wird erreicht, dass das betreffende Fahrzeug keinerlei Um- oder Vorrüstungsmaßnahmen erfahren muss; vielmehr kann ein üblicher, unmodifizierter Lkw o.dgl. Fahrzeug die erfindungsgemäße Vorrichtung in der vorgesehenen Weise überfahren und das erfindungsgemäße Messen der Reifenparameter bewirken.

Im Rahmen besonders bevorzugter Weiterbildungen der Erfindung ist die erfindungsgemäße Vorrichtung zudem so ausgestaltet, dass das Messen von Reifendruck und Reifenprofiltiefe durch die jeweiligen Erfassungsmittel während desselben Bewegungs- bzw. (Über-)Fahrvorgangs des Fahrzeugs erfolgt. Dies optimiert dann zusätzlich die erforderliche Messdauer, da etwa Rangieraufwand oder dergleichen durch den Fahrzeugführer im Idealfall vermieden werden kann.

Es hat sich im Rahmen der Realisierung der erfindungsgemäßen Vorrichtung als vorteilhaft herausgestellt, die erfindungsgemäße Messung des Reifendrucks auf der Basis einer Kraftmessung durchzuführen, welche ein betreffender Fahrzeugreifen auf unterliegende Druck- bzw. Kraftmessmittel während des Überfahrens ausübt. Dabei ist die weiterbildungsgemäß vorgesehene und beanspruchte Erkenntnis kritisch, dass ein ermittelter Fahrzeug-Reifendruck abhängig von einer aktuellen Reifentemperatur ist; da, wie im Rahmen des erfindungsgemäßen Kontext vorgesehen, die Reifendruckerfassung des Fahrzeugs (eines oder mehrerer Fahrzeugreifen des Fahrzeugs) zu jedem geeigneten Zeitpunkt während eines LKW-Betriebs erfolgen kann, besteht insbesondere die Möglichkeit, den Umstand zu berücksichtigen, dass der betreffende Reifen nach langer Fahrt eine erhöhte Betriebstemperatur aufweist, welche weiterbildungsgemäß durch die Reifentemperatur-Erfassungsmittel erfasst und danach kompensierend auf die Erfassung des Reifendrucks berücksichtigt wird.

Da im Rahmen der vorliegenden Erfindung die Erfassung des Reifendrucks sowie die Erfassung der Reifenprofiltiefe bei sich bewegendem Fahrzeug erfolgen, ist es weiterbildungsgemäß vorteilhaft, auch diese Reifentemperaturmessung so vorzusehen, dass sie bei dieser Bewegung erfolgen kann. Entsprechend ist es weiterbildungsgemäß beansprucht, die Temperaturerfassung berührungslos, typischerweise etwa realisiert mittels einer Infrarot-Temperaturmessung und gerichtet auf eine Flanke eines zu messenden Fahrzeugsreifens, durchzuführen.

Im Rahmen bevorzugter Realisierungsformen der Erfindung erfolgt das Ermitteln des Fahrzeugdrucks durch die erwähnte Kraftmessung, indem der sogenannte Latsch des Fahrzeugsreifen festgestellt wird, nämlich eine sich an der Übergangsstelle zwischen Fahrzeugreifen und unterliegendem Boden ergebene wirksame Auflagefläche des Fahrzeugreifens. Im Rahmen bevorzugter Realisierungsformen der Erfindung ermöglicht dabei die erwähnte Kraft- bzw. Druckmessung des sich bewegenden Fahrzeugs unterhalb des Fahrzeugreifens (genauer: beim Überfahren einer entsprechenden Kraftmessanordnung) eine Erfassung einer Länge dieser Latsch-Fläche (wobei der Begriff "Länge" in Überfahr- bzw. Fahrtrichtung bestimmt ist). Die zur Bemessung der Breite der Latsch-Fläche erforderliche Messung erfolgt im Rahmen bevorzugter Ausführungsbeispiele optisch, wobei in typischer Realisierungsform eine stirnseitig (also in Richtung der Lauffläche) auf einen zu messenden Fahrzeugreifen gerichtete optische Mess- und/oder Bilderfassungseinheit in ansonsten bekannter Weise geeignet ist, eine Flächenbreite des Latsches festzustellen (diesbezüglich ist auf die Eignung der in der erwähnten EP 1 952 092 beschriebenen Vorrichtung zu verweisen, eine Auflage- bzw. Latschbreite eines Fahrzeugreifens durch die dort beschriebenen optischen Mittel festzustellen). Alternativ kann auch über die optischen Mittel im Zeitverlauf mehrerer Messungen (oder lediglich mit einer optischen Messung) die Latsch-Länge ermittelt werden.

Im Rahmen bevorzugter Weiterbildungen der Erfindung ist es damit dann synergistisch ermöglicht, die zur optischen Erfassung der Reifenprofiltiefe des Fahrzeugs beim Fahren bzw. Überfahren benutzten Mittel zusätzlich zu benutzen, um die für die Reifendruckerfassung notwendige Latsch-Breite (ggf. auch Latsch-Länge) festzustellen, so dass im Rahmen der vorliegenden Erfindung eine Vorrichtung geschaffen werden kann, welche integrativ und synergistisch die beteiligten Systeme zum Erreichen der erfindungsgemäßen Aufgaben zusammenführt.

Im Rahmen bevorzugter Weiterbildungen der Erfindung ist eine Fahrzeugidentifikationseinheit vorgesehen, welche mindestens eine Fahrzeugidentifikation (typischerweise ein front- und/oder rückseitiges Nummernschild als eindeutig identifizierendes Fahrzeugkennzeichen des Fahrzeugs) erfasst. Dies geschieht erfindungsgemäß vorteilhaft durch optische Bilderfassungsmittel, die in ansonsten bekannter Weise aus einem elektronisch erfassten Bild durch geeignete Zeichenerkennung eine elektronische Kodierung des jeweiligen Fahrzeugkennzeichens ermöglichen. Gemäß wiederum bevorzugter Weiterbildung geschieht dies sowohl front- als rückseitig bezogen auf eine Überfahrrichtung des Fahrzeugs, um den Fall abzudecken, dass eine (frontseitig zu erfassende) Zugmaschine eine andere Kennzeichnung aufweist als das Kennzeichen eines rückwärts erfassten Auflegers.

Diese Weiterbildung ermöglicht dann wiederum die elektronische Weiterverarbeitung des Identifikationssignals, mit zahlreichen Varianten und Weiterbildungsmöglichkeiten im Rahmen der vorliegenden Erfindung: So ist es einerseits vorteilhaft und im Rahmen der Erfindung vorgesehen, diese Fahrzeugidentifikationsdaten zu nutzen, um die erfassten und elektronisch zu verarbeitenden Reifenparameter geeignet in einer Datenbankeinheit abzulegen. Diese Daten stehen dann wiederum zum unmittelbaren oder späteren Abruf zur Verfügung, wobei einerseits unmittelbare, fahrzeugspezifische Daten auf verschiedene Weise, wie nachfolgend zu beschreiben sein wird, ausgegeben werden können, alternativ für einen Fuhrpark oder dergleichen Mehrzahl von Fahrzeugen bzw. Reifen aggregierte Daten zusammengeführt einem jeweiligen Nutzer, auch für weitergehende statistische Auswertungen, zugeführt werden können. In erfindungsgemäß vorteilhafter Weise sind den erfindungsgemäßen Ausgabemitteln Transaktionsmittel zugeordnet, welche zum Durchführen eines geeigneten Bezahl- bzw. Freigabevorgangs vorgesehen sein können. Damit ergibt sich dann vorteilhaft die Möglichkeit, den Betrieb der erfindungsgemäßen Vorrichtung zum Erfassen der Reifenparameter und/oder Ausgeben der erfassten Reifenparameter in Form des Anzeigens des Messergebnisses von einem (vorherigen oder späteren) Transaktionsvorgang abhängig zu machen: So entsteht damit beispielsweise die Möglichkeit, ein (nach Erfassung der Fahrzeugidentifikation) nicht identifiziertes bzw. unbekanntes Fahrzeug zur Grundlage einer Abrechnungstransaktion zu machen, bei welcher ein Fahrzeugführer oder-halter durch Durchführen eines Bezahlungsvorganges und/oder Eingabe einer geeigneten Freigabekodierung das erfindungsgemäße Anzeigen des Ergebnisses der Messung in der Form einer Freischaltung ermöglicht. Dies gestattet etwa das Realisieren von Bezahl-, Gutschein-, Promotions-, Rabatt- und/oder Sponsoring-Systemen, wobei durch geeignete Konfiguration der Transaktionsmittel beliebige finanzielle, zeitliche und/oder technische Parameter, eingeschlossen Beschränkungen, durch einen jeweiligen Systembenutzer einricht- und betreibbar sind.

Im Rahmen bevorzugter Formen des Anzeigens des Messergebnisses liegen verschiedene, auch mobil taugliche Ausgabeformate für einen Fahrzeugführer oder eine andere Bedienperson, ergänzend oder alternativ Formate für einen stationären Datenempfänger. Hierzu gehört im Rahmen der Erfindung vorteilhaft das Anzeigen des Ergebnisses, typischerweise als Reaktion auf eine Freischaltung oder erfolgte Transaktion mit Hilfe der weiterbildungsgemäß vorteilhaften Transaktionsmittel, mobil mittels geeigneter Mobilfunkdatenformate zu übertragen, hierzu gehören auch geeignete E-Mail-Datenformate, Fax-Datenformate, alternativ das Ausgeben über eine Druckereinheit auf physische Träger in Form von Papier oder dergleichen.

Besonders bevorzugt ist es im Rahmen der vorliegenden Erfindung, die Vorrichtung in der Art eines nicht auf lokale Verwendung beschränkten Systems in ein Client-Server-System zu erweitern und zur Kommunikation zwischen Client(s) und Server geeignete, typischerweise öffentliche Datenübertragungsnetze (insbesondere das Internet mit geeigneten gängigen Protokollen) zu nutzen. Vorteilhaft ist es hierbei, die weiterbildungsgemäß vorgesehene Datenbankeinheit zum Ablegen jeweiliger Fahrzeugidentifikationsdaten und der zugehörigen gemessenen Reifenparameter serverseitig vorzusehen, während auf der Seite wenigstens eines Clients dann sowohl die erfindungsgemäße Vorrichtung mittels der Reifendruck- und Reifenprofiltiefe-Erfassungsmittel, zugehöriger Auswertemittel, ferner Ausgabemittel sowie typischerweise auch Transaktionsmittel vorzusehen sind, welche weiterbildungsgemäß in das Client-Server-System eingebunden sind und auch systemweit die weiterbildungsgemäß vorgesehenen Bezahl- bzw. Freigabevorgänge steuern und autorisieren.

In ergänzender Weiterbildung des Client-Server-System-Gedankens der vorliegenden Erfindung ist es ermöglicht, Nutzern, typischerweise Haltern und/oder Verantwortlichen für eine Mehrzahl von Fahrzeugen und zu messenden Fahrzeugreifen, unmittelbar Zugang auf die serverseitige Datenbankeinheit zu geben. Auch diese Funktionalität, welche etwa dem Nutzer das aktuelle Überwachen seiner Fahrzeugflotte im Hinblick auf die Reifenparameter und/oder ergänzende statistische oder Vorhersageaufgaben ermöglicht, ließe sich ggf. dann zusätzlich über die Transaktionseinheit vorsehen, welche auch dann derartige serverseitige Zugriffe zum Gegenstand von (typischerweise zu vergütenden) Transaktionen macht.

In erfindungsgemäß vorteilhafter Weise sind die erfindungsgemäßen Ausgabemittel zum Anzeigen des Ergebnisses der Messung für die das Fahrzeug führende Bedienperson im oder aus dem Fahrzeug so ausgestaltet, dass diese ein Symbol- und/oder Schwellwertsignal darstellen. In der praktischen Realisierung kann dies dazu führen, dass etwa in der Art eines typischen Ampelsignals mit gängigen Signalfarben (einerseits für ein Signal, welches ausreichende Reifenparameter, andererseits nicht ausreichende bzw. nicht mehr tolerierbare Reifenparameter darstellt) dem Fahrzeugführer signalisiert wird, kurzfristig etwa eine Behebung von Reifenmängeln (d.h. mangelnder Luftdruck und/oder fehlender Reifenprofiltiefe) durchzuführen. Eine derartige Schwellwert-basierte Darstellung, typischerweise in Farbkodierung und/oder binärer bzw. Symbolausgabe, ist auch durch flüchtige Betrachter aus dem Fahrzeug heraus eindeutig aufzunehmen und erfordert nicht die Auseinandersetzung des Fahrzeugführers mit detaillierten Daten. Gleichzeitig kann, im Rahmen des vorbeschriebenen Systemgedankens, ein solches Schwellwertsignal benutzt werden, um, zunächst noch ohne die Notwendigkeit einer fahrzeugidentifizierenden oder auf einem Bezahlvorgang basierenden Transaktion, jedem überfahrenen Fahrzeug einen möglichen Mangel zu signalisieren, mit der weiteren Folge, dass als Reaktion auf das Schwellwertsignal dann möglicherweise ein (Bezahl-) Transaktionsvorgang bewirkt wird.

Hinzu kommt die vorteilhafte Wirkung, dass gerade bei hoher Verbreitung des erfindungsgemäßen Vorgangs und häufigem Durchführen der Erfassungsvorgänge (vereinfacht durch das Überfahren über eine gemeinsame Einheit) die Verkehrssicherheit beträchtlich erhöht werden dürfte, da, erfindungsgemäß vorteilhaft, die Aufmerksamkeit der Fahrzeuglenker und deren Bewusstsein für Fahrzeugmängel an Reifen gestärkt werden.

Im Ergebnis löst daher die vorliegende Erfindung das sich aus dem Stand der Technik stellende Problem in überraschend einfacher und wirkungsvoller Weise. Nicht nur ist durch die Umsetzung des vorliegenden Systems eine beachtliche Zeitersparnis bei der Überprüfung von Reifenparametern einzelner Fahrzeuge (oder auch von Fahrzeugen einer Flotte) zu erreichen, auch bietet die vorliegende Erfindung die Möglichkeit, Ressourcen in Form von Reifenmaterial und Kraftstoff optimiert einzusetzen. Darüber hinaus entsteht der öffentlich wirksame und nützliche Vorteil eines schneller und zuverlässiger erfassbaren Reifenmangels von Fahrzeugen, was sich in erhöhter Verkehrssicherheit niederschlägt.

Aus der Sicht von Betreibern der erfindungsgemäßen Vorrichtung ergibt sich das Potential für das Errichten von Mess- und Transaktionssystemen, welche, bevorzugt über einen lokalen Standort hinaus vernetzt, beachtliche Synergiepotentiale ermöglichen, welche nicht nur Flottenkunden die Realisierung der erwähnten Ressourcen- und Messvorteile ermöglichen, darüber hinaus nutzbringendes Datenmaterial generieren und, für alle am System beteiligten positiv, wirtschaftlichen Nutzen mit technischem Nutzen vorteilhaft kombinieren.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: ein Blockschaltbild der erfindungsgemäßen Vorrichtung zum Messen von Reifenparametern eines Fahrzeugs gemäß einer ersten Ausführungsform der vorliegenden Erfindung;
- Fig. 2: ein Flussdiagramm zur Erläuterung des erfindungsgemäßen Betriebs der Vorrichtung gemäß Fig. 1, gleichermaßen zur Illustration des erfindungsgemäßen Verfahrens zum Messen und Ausgeben von Reifenparametern eines Fahrzeugs gemäß einer ersten Realisierungsform;
- Fig. 3: ein schematisches Blockdiagramm zum Verdeutlichen der erfindungsgemäßen Vorrichtung zum Messen von Reifenparametern eines Fahrzeugs gemäß einer zweiten Ausführungsform der Erfindung;
- Fig. 4: ein Flussdiagramm zum Verdeutlichen von Verfahrensschritten eines Betriebsverfahrens der Vorrichtung gemäß Fig. 3, gleichermaßen eines erfindungsgemäßen Verfahrens zum Messen und Ausgeben von Reifenparametern eines Fahrzeugs gemäß einer zweiten Realisierungsform;
- Fig. 5: ein schematisches Kraft-/Wegdiagramm zum Verdeutlichen des Kraftverlaufs eines auf die Reifendruck-Erfassungsmittel (genauer: Kraftaufnehmer) rollenden Reifens mit Zu- und Ablauf als Grundlage für eine Signalauswertung zur Ermittlung der (wirksamen) Latsch-Länge (es ist in der Horizontalen eine Längendimension aufgetragen).

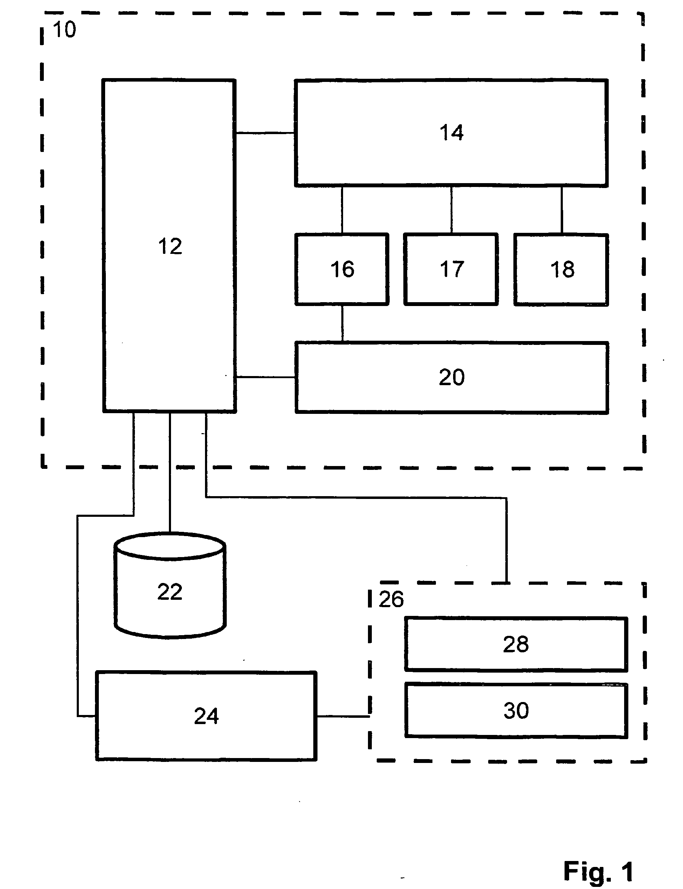

Die Fig. 1 zeigt ein schematisches Blockschaltbild der Vorrichtung zum Messen von Reifenparametern eines Fahrzeugs gemäß einem ersten bevorzugten Ausführungsbeispiel der vorliegenden Erfindung. Diese Vorrichtung weist, umrandet durch die gestrichelte Linie 10, Erfassungsmittel zum Erfassen eines Reifendrucks 14 sowie Erfassungsmittel für eine Reifen-Profiltiefe 20 auf. Diese Mittel sind als stationär an einem vorbestimmten Standort eingerichtete, typischerweise in einen Boden eingelassene Messsysteme realisiert, wobei die Profiltiefe-Erfassungseinheit 20 in der Art der in der EP 1 952 092 offenbarten Weise eine optische Vorrichtung 16 benutzt, um mittels Laser-Triangulation auf der Basis einer Mehrzahl von auf einem Reifenprofil eines überfahrenden Reifens abgebildeten Linien und mehreren diesbezüglichen, digital auswertbaren Bildaufnahmen eine Profiltiefe dieses Reifens zu messen.

Im Rahmen der vorliegenden Erfindung wird dieses optische Signal, welches etwa in der in der vorstehenden Druckschrift beschriebenen Weise insbesondere auch eine Quantifizierung einer wirksamen Profilbreite des Reifens ermöglicht, zusätzlich benutzt, um mittels der Einheit 14 den Reifendruck zu bestimmen. Dies geschieht gemäß bevorzugter Realisierungsformen der Erfindung dadurch, dass der Reifen in der beschriebenen Messvorrichtung über ein System aus Kraftaufnehmern rollt und aus dem Verlauf des von den Kraftaufnehmern (genauer: einer gekoppelten Mehrzahl von Kraftsensoren mittels gemeinsamer, zum Überfahren vorgesehener Druckplatte) erzeugten Signals dann eine wirksame Länge einer Auflagefläche des betreffenden Reifens auf dem Untergrund ("Latsch") festgestellt werden kann.

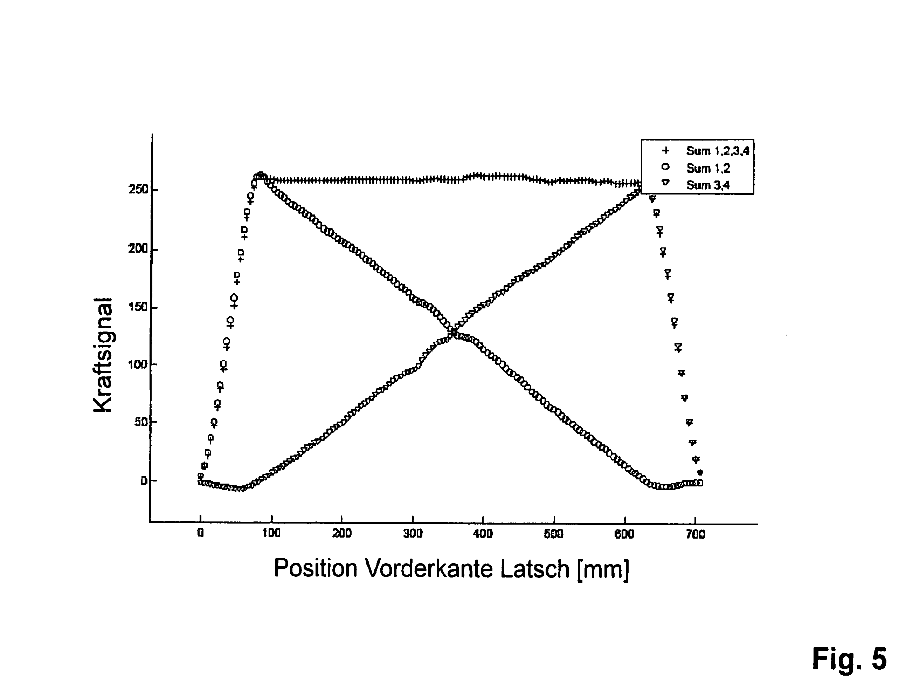

Genauer gesagt, und unter Bezug auf das Signaldiagramm der Fig. 5, erzeugt ein auf die Kraftaufnehmer (genauer: ein System gekoppelter Kraftaufnehmer durch Aufrollen auf eine gemeinsame, aufliegende Druckplatte) rollende Reifen einen Kraft-/Zeitsignalverlauf entsprechend der Darstellung der Fig. 5; so zeigt die Fig. 5 in der Überlagerung ein Kraft-/Wegsignal eines ersten Kraftaufnehmerpaares (verbunden in Achsenrichtung d.h. in Richtung quer zur Fahrtrichtung) sowie eines entsprechend verbundenen-zweiten Kraftaufnehmerpaares, in Längsrichtung (d.h. Fahrtrichtung) versetzt. Entsprechend geben die jeweiligen Kraft-/Wegverläufe das jeweilige Auf- bzw. Abrollen und das Auftreffen des Reifens bis zu einem Kraftmaximum wieder, mit jeweils unterschiedlichen Flankenverläufen, bezogen auf ein voreilendes bzw. nacheilendes Sensorpaar. Die jeweils steilen Flanken sind dann Grundlage für die erwähnte Bestimmung einer effektiven (wirksamen) Latsch-Länge, wobei eine finale wirksame Latsch-Länge sich dann aus der kürzeren ansteigenden Flanke eines ersten, voreilenden Sensorpaares sowie einer abfallenden Flanke eines zweiten, nachlaufenden Sensorpaares in der oben beschriebenen Weise durch Addition ermittelt. Als "Länge" wird dabei eine erste Dimension der Latsch-Fläche in der Fahrtrichtung verstanden und als "wirksam" diejenigen Bereiche, bei welchen ein Krafteintrag in die Kraftaufnehmer maximal ist, entsprechend einem linearen bzw. annähernd linearen Anstieg des Signals der Fig. 5 beim Auffahren (bzw. abfallend beim Abfahren). Durch ansonsten bekannte und hier nicht näher zu erläuternde Techniken der Signalauswertung wird der lineare Bereich (entsprechend hier auch erfinderisch der Bereich der in etwa maximalen Steigung) festgestellt. Erfindungsgemäß vorteilhaft hat sich dann herausgestellt, dass dieser dann, wie beschrieben, unmittelbar zur Ermittlung der gewünschten (wirksamen) Latsch-Länge nutzbar ist.

Entsprechend basiert die vorliegende Latsch-Längen-Ermittlung auf einer eindimensionalen Kraftverlaufs-Auswertung über der Zeit (bzw. über dem korrespondierenden Ort, fixiert durch die zugeordnete Länge der Kraftaufnehmerplatte).

Eine zur Ermittlung der Latsch-Fläche zugehörige effektive Latsch-Breite erfolgt in der nachfolgend zu beschreibenden Weise optisch und ohne Einfluss der beschriebenen Kraftaufnehmer.

Mit dem durch die Einheit 16 optisch erzeugten Profilbreitensignals, welches in etwa mit der Latsch-Breite korrespondiert, ist damit zum Zweck der Bestimmung des Reifendrucks die gesamte Latsch-Fläche (Breite multipliziert mit Länge) vorliegend. Das wiederum von dem Kraftsensor erhältliche Kraftsignal des auf den Untergrund durch den Reifen gerichteten Kraftvektors (bezogen auf die Latsch-Fläche) ermöglicht dann die unmittelbare Ableitung des Reifendrucks, wobei zunächst noch erfahrungsbasierte, typischerweise tabellarisch abgelegte Korrekturwerte im Hinblick auf Reifenparameter einfließen. Damit lässt sich dann eine Reifendruckmessung durchführen, welche auf der Ermittlung der Latsch-Fläche basiert, insoweit technisch einfach und schnell funktioniert. Der Umstand, dass durch die optisch ermittelte Latsch-Breite eine etwaige und theoretisch mögliche unterschiedliche Druckverteilung in der Breite (d.h. quer zur Fahrtrichtung) vorliegt, kann mit dieser Technologie nicht ermittelt werden, hat sich jedoch in der praktischen Realisierung als vernachlässigbar herausgestellt und wird insoweit vorliegend nicht berücksichtigt.

Gemäß der vorliegenden Erfindung fließt zusätzlich in die Reifendruckbestimmung ein durch die Einheit 17 berührungslos am Reifen (konkret: mittels etwa einer Infrarot-Temperaturmessung auf eine Reifenflanke gerichtet) gemessener aktueller Reifen-Temperaturwert ein, wodurch die Temperaturabhängigkeit des Reifendrucks berücksichtigt wird.

Auf diese Weise sind dann die Erfassungsmittel in der Lage, mittels einer zentralen Verarbeitungseinheit 12 die so gewonnenen Daten zu aggregieren und einer nachfolgenden Speicherung in einer Speichereinheit 22 zuzuleiten.

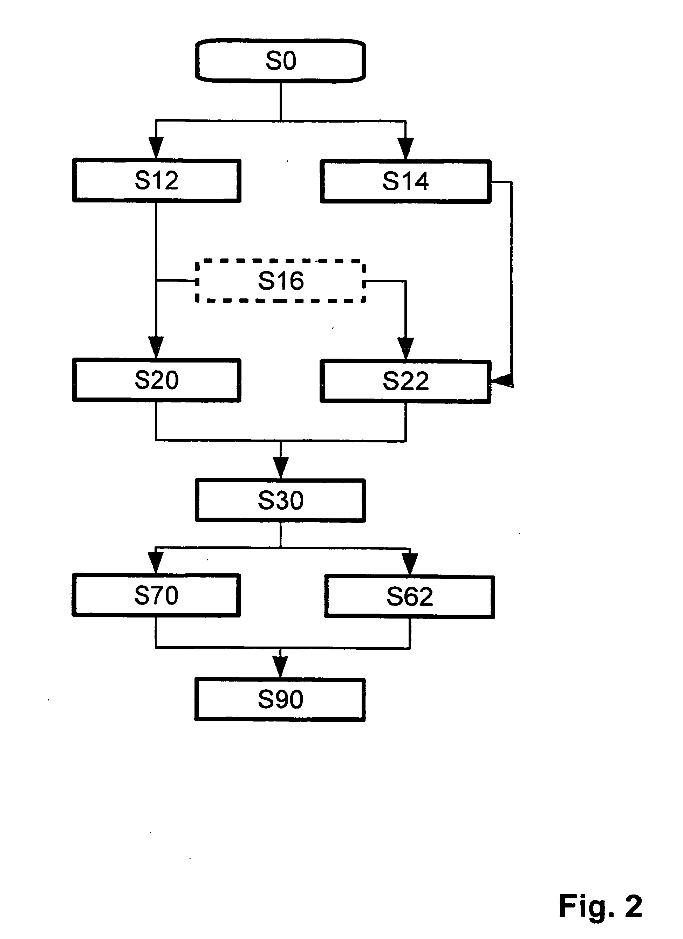

Die Abfolge dieser Verarbeitungsschritte verdeutlicht parallel das Flussdiagramm gemäß Fig. 2: In Schritt S0 fährt das die zu messenden Reifen aufweisende Fahrzeug auf die Messvorrichtung (wobei diese sowohl für einen einzelnen Reifen, als auch für eine Achse, d.h. mit zwei parallel zueinander geführten Reifen konzipiert sein kann und im zweiten Fall dann entsprechend die optischen Mittel 16, die Temperaturerfassungsmittel 17 und die Krafterfassungsmittel 18 geeignet doppelt für jede Seite vorgesehen sind).

Es findet dann in Schritten S12 und S14 die optische Vermessung (S12) in der vorbeschriebenen Weise durch das Ausführen mehrerer sequentieller Bilderfassungen statt (typische Abfolge ca. 5 msec), annähernd parallel dazu kann bereits die berührungslose Temperaturmessung (S14) erfolgen.

Zusammengeführt werden diese Messwerte dann in den Bestimmungsschritten S20 zur Bestimmung der Profiltiefe aus den optischen Daten bzw. zur Bestimmung des Reifendrucks aus der optisch erfassten Profil- bzw. Reifenbreite sowie Temperatur-Korrektiv. Vorteilhaft und fakultativ kann gemäß Schritt S16 auch die anhand der Einheit 18 vorbestimmte Kraftmessung erfolgen, wobei eine alternative Realisierungsform der Erfindung vorsieht, dass allein durch das sequentielle und als Abfolge von Einzelmessungen vorliegende optische Breitensignal bereits auch eine Latsch-Länge ermittelbar ist. Konkret würde, bei bekannter Geometrie etwa eines Bildfensters, mit welchem eine aktuelle Abbildung des überfahrenden Reifenprofils erfasst wird, aus der Abfolge der Einzelbilder (bei dann sukzessive das Bildfenster ausfüllendem Profilmuster und wieder freigebendem Profilmuster) und Kenntnis einer Bildaufnahmefrequenz durch entsprechende geometrische Auswertung eine Latsch-Länge entsprechend des Überrollvorgangs bestimmbar sein, zusätzlich zu der ja ohnehin unmittelbar in Querrichtung aus dem Bild detektierten Latsch-Breite, und mit der weiteren Möglichkeit, aus dem Bild eine etwaige Latsch-Form z.B. das Ergebnis eines deutlichen Unterdrucks und einer damit verbundenen Reifenverformung, festzustellen.

Beide Messwerte werden dann als geeigneter Datensatz der Reifenparameter in Schritt S30 zur Weiterverarbeitung, insbesondere zunächst zur Datenspeicherung gemäß Schritt S62, bereitgestellt.

Gemäß der ersten Ausführungsform der vorliegenden Erfindung ist, über die Erfassungsmittel 10 hinaus, eine Ausgabe- und Transaktionsfunktionalität realisiert: So sieht das erste Ausführungsbeispiel als Funktionseinheit 26 Ausgabemittel vor, welche die Reifenparameter auf zwei Weisen einem Nutzer ausgeben können: Zum einen sind in Form der Einheit 28 Symbol- und/oder Schwellwertmittel vorgesehen, welche, in der Art etwa einer Ampel od.dgl., einem Nutzer im Fahrzeug selbst (also z.B. aus einem LKW-Cockpit heraus zur Betrachtung) signalisieren können, ob die als Resultat des Überfahrens ermittelten Reifenparameter - Reifenprofiltiefe und Reifendruck - den vorbestimmten Grenz- bzw. Schwellwerten entsprechen, also etwa noch der gesetzlich erforderlichen Norm genügen und/oder etwa für einen gebrauchstechnisch günstigen Mindest-Reifenluftdruck stehen. Dies könnte dann etwa ein Grün-Signal der Symbol- und Schwellwertausgabe bewirken. Dagegen würde etwa das Unterschreiten eines oder beider der Reifenparameter unter einen vorbestimmten Schwellwert ein Symbol "Rotlicht" erzeugen und damit dem Fahrzeugführer signalisieren, dass weitere Schritte erforderlich sind. Im Rahmen der vorliegenden Struktur ist es insbesondere auch ermöglicht, eine Ausgabe durch die Einheit 28, etwa in Form der zur Vereinfachung beschriebenen Ampel, unabhängig von einer vorangehenden Autorisierungs- oder Bezahlungs-Transaktion zu machen, vielmehr etwa diese einem Fahrer zu jedem Zeitpunkt und kostenlos anzubieten.

Alternativ ist es im Rahmen der Erfindung möglich, die Ausgabe durch die Einheit 28 sowie, zusätzlich eine Ausgabe durch die Einheit 30, abhängig zu machen von einer Freigabe durch eine vorgeschaltete Transaktionseinheit 24. Diese Transaktionseinheit, angesteuert durch die Verarbeitungseinheit 12, ist etwa in der Lage, als Reaktion auf eine vorzunehmende Transaktion (etwa das Empfangen von Freigabedaten, das Durchführen eines Bezahlungsvorgangs od. dgl.) überhaupt erst die Aktivierung der Ausgabeeinheit 26 oder Teile von dieser zu ermöglichen.

In der konkreten Realisierung könnte es für die Transaktionseinheit 24 eine Code-Eingabevorrichtung bedeuten, alternativ etwa auch Kreditkarten-Bezahlungs- oder Kassensystem, welches es durch eine Bedienperson oder auf andere Weise, etwa mittels Dateneingabe oder -Übertragung, notwendig macht, eine Transaktion positiv abzuschließen, bevor eine Ausgabe ermöglicht ist. In der oben beschriebenen (zunächst einfach konfigurierten) Realisierungsform des ersten Ausführungsbeispiels der Fig. 1 könnte dies etwa so realisiert werden, dass zwar die symbolische Ausgabe der Einheit 28 ohne vorherige Transaktion ermöglicht ist, würde jedoch der LKW-Führer am Beispiel erfahren, welche Reifenparameter fehlerhaft sind und welche Werte etwa diese aufweisen, könnte er erst durch Eingabe oder eines Freigabecodes in die geeignet konfigurierte Transaktionseinheit dann einen Ausdruck mittels der Ausgabeeinheit 30, welche in diesem Beispiel dann einen geeignet konfigurierten Drucker für eine Ausgabe auf einem Papierträger aufweist, auslösen.

Im Ergebnis ermöglicht es bereits diese erste, einfache Realisierungsform der Erfindung, das erfindungsgemäß vorteilhafte Prinzip der integrierten Profiltiefe- und Reifendruckmessung in ein Transaktions- und Ausgabesystem einzubetten, welches situativ und nutzergerecht dem jeweils an den Reifenparametern Interessierten alle notwendigen Informationen zugänglich macht und etwa einem Betreiber mittels der Transaktionseinheit 24 die Möglichkeit schafft, geeignete Versionierungen dieser Ausgabe vorzunehmen.

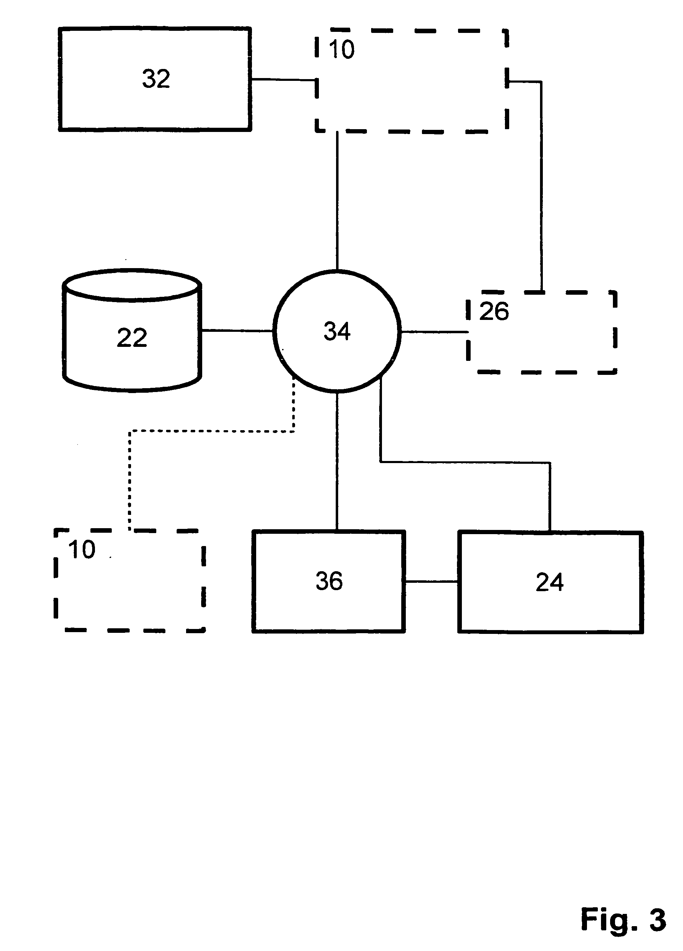

Das erste Ausführungsbeispiel der Fig. 1, wie auch das nachfolgend zu erläuternde, komplexere und in ein Datennetz eingebettete Ausführungsbeispiel der Fig. 3 ermöglichen in einfacher Weiterbildung zusätzlich die Identifikation bzw. Autentifikation eines Nutzers (bzw. eines dem Messvorgang zugrundeliegenden Fahrzeugs; diesem liegt die Annahme zugrunde, dass in der Regel ein Reifen stets im Montagezustand am zugehörigen Fahrzeug der Messvorrichtung zugänglich wird bzw. das erfindungsgemäße Verfahren durchläuft). Eine derartige, in der Fig. 1 nicht gezeigte und in der Fig. 3 mit dem Bezugszeichen 32 bezeichnete Identifikationseinheit würde typischerweise als Anordnung mit mindestens einer Bilderfassungseinheit realisiert sein können, welche als Kamera auf das Zulassungskennzeichen des Fahrzeugs gerichtet ist (weiter bevorzugt realisiert als Paar von zwei, jeweils auf ein vorderes und hinteres Kennzeichen des Fahrzeugs gerichteten Kameraeinheiten, mit dem Zweck, ggf. abweichende Kennzeichnungen einer Zugmaschine und eines Auflegers erfassen zu können). Aus einem derartigen Bilderfassungssignal wird dann in ansonsten bekannter Weise mittels Verfahren der Bild- und Zeichenerkennung ein Identifikationssignal für das betreffende Fahrzeug (bzw. zusätzlich für einen Aufleger mit separatem Kennzeichen) erzeugt, nämlich in Form des amtlichen Kennzeichens. Dies dient der eindeutigen Identifikation dieses Fahrzeugs und kann dann zusammen mit den Reifenparametern in der Datenspeichereinheit 22 abgelegt werden und hier etwa auch als Index dienen. Dabei ist der Begriff der "Identifikationseinheit" bewusst weit und funktional zu begreifen und nicht auf die funktionale Realisierung mittels einer Bilderfassungseinheit beschränkt. Vielmehr lässt sich in einer derartigen Funktionalität durch zahlreiche weitere Identifikations-Technologien realisieren, etwa RFID, geeignete Magnet-Codierung, Erfassung typischerweise auf einer Lkw-Flotte vorhandener Planenlogos od. dgl. Aufschriften.

Die beschriebene Modifikation bringt etwa gegenüber der vereinfachten Version der Fig. 1 den Vorteil, dass bereits fahrzeugspezifische Daten erzeugt und benutzt werden können, ohne dass etwa eine Bedienperson ein Kraftfahrzeugkennzeichen in die Transaktionseinheit 24 eingeben muss, und ohne dass etwa für jeden Vorgang gesonderte manuelle Freigabevorgänge vorgenommen werden müssen. So könnte es beispielsweise konfiguriert sein, dass die Transaktionseinheit 24, im Zusammenwirken mit einer Identifikationseinheit, anhand einer vorbestimmten und gespeicherten Tabelle von Kennzeichnungen die Information erhält, für welche Fahrzeuge bereits, z.B. aufgrund einer vorgeschatteten Kauf-Transaktion, eine Freigabe für das Ausgeben der jeweiligen Daten besteht.

Die Möglichkeiten einer solchen Identifikation in Verbindung mit beliebigen Transaktions-Konfigurationen sind nahezu unbegrenzt; so bietet sich einerseits an, in der vorbeschriebenen Weise kunden- bzw. flottenweise bereits Fahrzeuge (und damit deren Reifen) zur unbeschränkten Messung und Datenausgabe freizugeben, so dass insoweit etwaige Verarbeitungszeiten sich auf das reine Durchfahren und ggf. Entgegennehmen eines schriftlichen Protokolls od. dgl. beschränken; zusätzlich vereinfachend könnte etwa eine solche Ausgabe auch erfolgen, indem drahtlos oder drahtgebunden Datensätze in ansonsten bekannter Weise durch Mobilfunk, Email oder auf andere Weise dann dem Fahrzeugführer selbst oder anderen Datenempfängern zugänglich gemacht werden.

Alternativ oder ergänzend bietet die Konfigurierbarkeit die Möglichkeit, auch in weitergehender Weise Transaktionen differenziert zu ermöglichen, etwa in Form von gratis zu vergebenden Codes, geeigneten Zeiten vergünstigter Teilnahme am Messverfahren ("Happy Hour"), durch Kupons oder andere Promotionsmaßnahmen od.dgl. in flexibler Weise Transaktionen auszulösen. Auch könnte es eine Weiterbildung der Transaktionseinheit ermöglichen, umgebungsbedingt und situationsabhängig die Konditionen für eine Datenausgabe zu variieren, z.B. feiertags- oder wetterabhängig entsprechende Preisgestaltungen vorzunehmen, oder aber die Art, wie die jeweiligen Ausgabemodi der Reifenparameter konfiguriert werden, gezielt zu beeinflussen (z.B. LKW oder Gespanne anderen Ausgabeformen zuzuordnen als etwa PKW).

Neben der beschriebenen Weiterbildung des Ausführungsbeispiels der Fig. 1 um die Identifikationseinheit 32 weist das zweite Ausführungsbeispiel der Fig. 3 eine weitere, fundamentale Modifikation gegenüber dem ersten, primär lokal darstellbaren Ausführungsbeispiel gemäß Fig. 1 auf: Gezeigt ist schematisch, wie in der Art eines (bevorzugt öffentlichen) Datennetzwerks 34 (typischerweise etwa das mittels geeigneter IP-Formate betreibbare Internet) eine Vernetzung mehrerer Erfassungseinheiten 10 auch über einen lokalen Standard hinaus erfolgen kann.

So zeigt lediglich anhand des Symbolblocks 10 das Ausführungsbeispiel der Fig. 3 wiederum eine an einem ersten Standort bestehende und in der Art der Fig. 1 konfigurierte Erfassungseinheit, eingerichtet zum Überfahren durch ein die zu messenden Reifen tragendes Fahrzeug. Dieser Erfassungseinheit 10 kann dann bevorzugt die bereits diskutierte Identifikationseinheit 32 lokal zugeordnet sein, um z.B. in der vorteilhaften Weise automatisch ein betreffendes Fahrzeug identifizieren und damit potentiell autentifizieren zu können. Auch ist bevorzugt lokal eine Form der Ausgabe gemäß Ausgabeeinheit 26 realisiert, typischerweise etwa zumindest in Form der Symbol- bzw. Schwellwertanzeige 28, alternativ auch weitere Mittel.

Geeignet ist in der Darstellung der Fig. 3 dann die Datenspeichereinheit 22 bevorzugt serverseitig zentralisiert, um sie einerseits für sämtliche als Clients zu begreifende lokale Erfassungseinheiten zugänglich zu machen. Darüber hinaus würde bevorzugt auch die Transaktionseinheit 24 über das Netz serverseitig zentralisiert, kann alternativ auch zusätzlich oder ausschließlich jeweils lokal clientseitig vorgesehen sein. Ergänzend ermöglicht es ein derartiges Client-Server-Netzwerksystem, geeigneten Partnern, z.B. Flottenkunden, einen direkten Zugriff auf die Datenspeichereinheit 22 über das elektronische Datennetz 34 zu geben. Dies kann beispielsweise dann nützlich sein, wenn Teile des kundenseitigen Flottenmanagements, etwa die Verwaltung der Reifenparameterdaten, funktional auf das vorliegende System ausgelagert werden soll. In diesem Fall würde die Transaktionseinheit 24 die Autorisierung eines über die Einheit 36 Zugreifenden vornehmen.

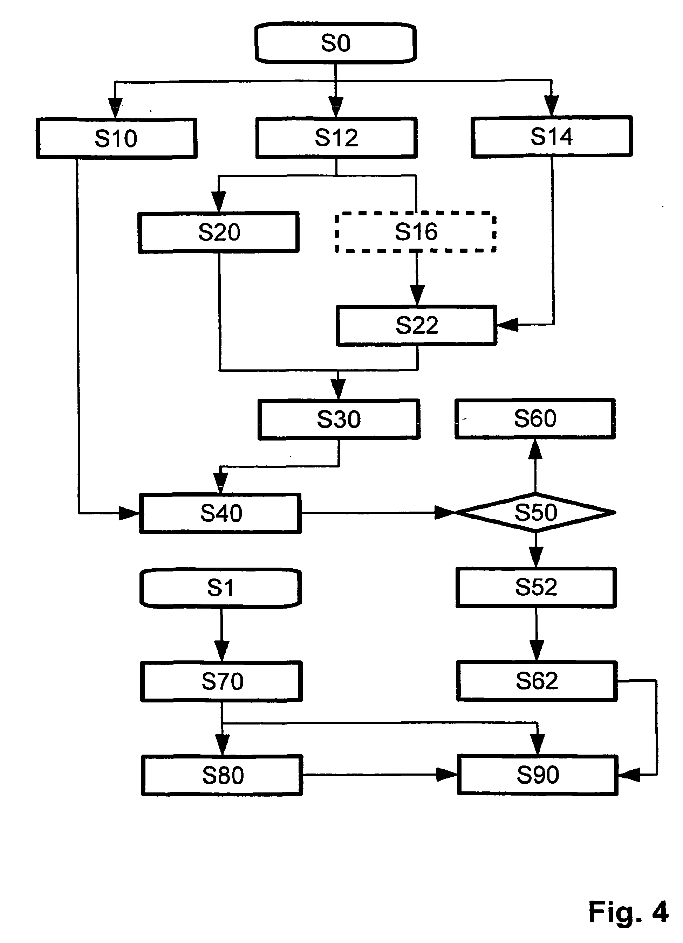

Die Fig. 4 verdeutlicht im Blockschaltbild die Funktionsweise und das Verfahren zum Betreiben der Vorrichtung gemäß Fig. 3, wobei, analog zum ersten Ausführungsbeispiel der Fig. 1, 2, entsprechende Verfahrensschritte, wie auch entsprechende Funktionsblöcke, korrespondierende Schrittbezeichnungen und Bezugszeichen tragen. So erfolgt wiederum nach dem Auffahren bzw. Einfahren des die zu messenden Reifen tragenden Fahrzeugs in die Messvorrichtung (S0) die optische Messung (S12) sowie die Temperaturmessung (S14), parallel dazu die Fahrzeugidentifikation (S10) durch Bildaufnahme des amtlichen Kennzeichens und Verarbeitung zu einem amtlichen Kennzeichen-Datensatz. In der vorbeschriebenen Weise ermöglichen dann die Verarbeitungsschritte S20 sowie S16/S22 die Profiltiefenbestimmung bzw. die Reifendruckbestimmung mit fakultativ vorgeschalteter Kraftmessung, so dass gemäß Schritt S30 die Reifenparameter zur weiteren Speicherung und Übertragung bereitstehen. In Schritt S40 erfolgt die Zusammenführung mit den Ergebnissen der Fahrzeugidentifikation (S10), so dass dann im Entscheidungsschritt S50 festgestellt werden kann, ob ein Signal für die Ausgabeeinheit (genauer: Schwellwerteinheit 28) ausgegeben wird. Die Verarbeitungsschritte S52 bzw. S62 übertragen dann die mit einem Fahrzeug identifizierenden Kenner (Kennzeichen) versehenen Reifenparameter-Datensätze über das Datenübertragungsnetz der Speichereinheit 22, wo in Schritt S62 die Ablage erfolgt. Zur (Mehrwert-) Ausgabe hat dann etwa ein Benutzer die Möglichkeit, in Schritt S1 in geeigneter Weise Daten anzufordern und eine zugehörige Autorisierungs- bzw. Bezahlungstransaktion durchzuführen (Schritt S70), woraufhin dann in Schritt S80 die Inhalte des Datenspeichers geeignet selektiert abgerufen und in Schritt S90 in der geeignet und bestimmten Weise ausgegeben werden. Eine derartige Nutzer-Routine eignet sich dabei sowohl für eine lokale Transaktion (analog zum Vorgehen gemäß Fig. 1), als auch für einen Remote-Zugriff durch einen Flottennutzer analog zum Zugreifen durch die Einheit 36, als auch zum Durchführen weiterer, flexibel zu gestaltender Transaktions- und Ausgabemodi, wie vorstehend beschrieben.

Damit lässt sich etwa die vorliegende Einheit konfigurieren, um einen typischen kaufmännischen Grundsatz ,jeder enthält nur die Daten, für die er bezahlt" umzusetzen. Gleichzeitig lässt sich, je nach aktueller Konfiguration, dieser Grundsatz dann geeignet verfeinern oder anpassen. In der technischen Realisierung ermöglicht dabei die Identifikationseinheit (Bezugszeichen 32) ein automatisches Zuordnen zu bereits erfolgten Transaktionen (Bezahlvorgängen), wobei etwa im Fall von Erfassungsfehlern oder ganzheitlich, im System noch nicht erfassten Änderungen dann in geeigneter Weise Nachfragen durch das System ergehen oder Anforderungen ausgegeben werden, mittels der Transaktionseinheit eine erneute Identifikation vorzunehmen, aktualisiert Freigabedaten einzugeben oder ein etwaiges bestehendes Abonnement od.dgl. Konversationsstruktur zu erneuern.

Während es prinzipiell beliebige Möglichkeiten gibt, gerade die Datenübertragung zwischen den verschiedenen Einheiten und Entitäten des Ausführungsbeispiels der Fig. 3 auszugestalten, bietet es sich gemäß bevorzugter Realisierungsformen an, weitgehend standardisierte Datenformate und Protokolle (z.B. XML-Datenformate) zu verwenden, um insoweit mit vorhandener Datenbankinfrastruktur (etwa für die Implementierung der Datenspeichereinheit 22) und/oder Datenübertragungsprotokollen einfachst kompatibel zu sein. Auch ergibt sich so für extern zugreifende Nutzer (Bezugszeichen 36) die Möglichkeit, mit weitgehend standardisierten Zugriffwerkzeugen dann Daten zu nutzen und auszuwerten.

Gemäß der vorliegenden Erfindung ist zwar vorgesehen, grundsätzlich Messdaten (möglicherweise noch nach einem zwischengeschalteten Überprüfungsschritt auf Mess- oder Erfassungsfehler) zu speichern, um insoweit historische und statistische Daten erfassen zu können, welche wiederum Grundlage für zukünftige verfeinerte Auswertemodelle od.dgl. sein können. Alternativ ist es im Rahmen der vorliegenden Erfindung von Ausführungsformen umfasst, erfasste Daten nach Beendigung des erfindungsgemäßen Verfahrens zu löschen, um etwaigen anonymisierungs- und/oder datenschutzrechtlichen Vorschriften genügen zu können.

Schließlich ist es von der Funktionalität der vorliegenden Vorrichtung, insbesondere der Transaktionseinheit 24, umfasst, auch nachgelagerte oder entfernte Transaktionsvorgänge in Form von Abbuchungen, Einzugs-Zahlungsvorgängen od.dgl. vorzunehmen. So könnte etwa, nach Identifikation eines Fahrzeugs zu einem vorbekannten Pool von LKW-Flottenteilnehmern, eine Nutzung der Transaktionseinheit 24 dergestalt erfolgen, dass als Reaktion auf ein situatives Überfahren der erfindungsgemäßen Vorrichtung und das daraufhin durchgeführte Erfassen und Ausgeben der Reifenparameter ein hierfür vorbestimmter bzw. vereinbarter Bezahlungsbetrag als Abbuchungs-Zahlungstransaktion ausgelöst wird.

Weitere Modifikations- und Weiterbildungsmöglichkeiten sind nahezu unbegrenzt. So ermöglicht es beispielsweise die Transaktions- und/oder Ausgabeeinheit, flexibel auf Fahrzeuge zu reagieren, ergänzen oder alternativ auch etwa auf das Erfassen eines ausländischen Nummerschilds die Ausgabe eines gedruckten oder visuell erzeugten Informationsträgers in der jeweiligen zugehörigen Landessprache automatisch zuzuordnen.

Im Ergebnis ermöglicht es die vorliegende Erfindung, in überraschend einfacher, flexibel und nahezu an beliebige Anforderungen anpassbare Weise den traditionell statischen, manuelle Eingriffe erfordernden und zeitraubenden Prozess der Messung und Erfassung von Reifenparametern eines Fahrzeugs, insbesondere eines Nutzfahrzeugs, in ein System zu integrieren, welches nicht nur lediglich durch einfaches Überfahren einer Realisierungsform der erfindungsgemäßen Vorrichtung das Erfassen und Sichern dieser gewünschten Daten ermöglicht, damit beachtliche Flexibilitäts- und Zeitvorteile realisiert werden, darüber hinaus im Rahmen von peripheren Gestaltungen von Ausgabe, Transaktion und Vernetzung eine beliebige Anpassbarkeit auch an große, überregionale Systeme ermöglicht. Damit lassen sich nahezu beliebige Kunden mit sichtbarem Mehrwert bedienen, so dass zu erwarten steht, dass durch die vorliegende Erfindung der automatisierten Reifenprofil- und Reifendruckkontrolle zusätzliche Einsatzgebiete eröffnet werden, verbunden mit den positiven Effekten auf Ressourcenschonung und öffentliche bzw. Verkehrssicherheit.

## Patentansprüche

1. Vorrichtung zum Messen von Reifenparametern eines Fahrzeugs mit Mitteln (14) zum Erfassen eines Reifendrucks des Fahrzeugs, Mitteln zum Erfassen einer Reifenprofiltiefe (20) des Fahrzeugs und Mitteln (26) zur Ausgabe gemessener Reifenparameter, die den Reifendruck und die Reifenprofiltiefe beinhalten und/oder berücksichtigen, wobei die Reifendruck-Erfassungsmittel (14) und die Reifenprofiltiefe-Erfassungsmittel (20) eine zum Überfahren durch das Fahrzeug ausgebildete Messanordnung aufweisen, die zum Messen des Reifendrucks sowie der Reifenprofiltiefe bei sich bewegendem Fahrzeug ausgestaltet ist und die Ausgabemittel (26) zum Anzeigen eines Ergebnisses der Messung so ausgebildet sind, dass eine das Fahrzeug führende Bedienperson diese im Fahrzeug oder aus dem Fahrzeug heraus unmittelbar nach dem Überfahren erfassen kann und/oder die Ausgabemittel (26) zum Übertragen des Ergebnisses der Messung mittels eines elektronischen, insbesondere öffentlichen Datenübertragungsnetzes an eine Datenempfängereinheit ausgebildet sind,
**dadurch gekennzeichnet,**
**dass** die Reifendruck-Erfassungsmittel und die Reifenprofiltiefe-Erfassungsmittel so ausgebildet sind, dass das Messen des Reifendrucks sowie das Messen der Reifenprofiltiefe durch gemeinsame Nutzung von optischen Messmittel (16) für beide Messvorgänge erfolgt.

2. Vorrichtung nach Anspruch 1.
**dadurch gekennzeichnet,**
**dass** die Reifendruck-Erfassungsmittel und die Reifenprofiltiefe-Erfassungsmittel so ausgebildet sind, dass das Messen des Reifendrucks sowie das Messen der Reifenprofiltiefe während desselben Bewegungs- und/oder Überfahrvorgangs des Fahrzeugs über die gemeinsame Messanordnung erfolgt.

3. Vorrichtung nach Anspruch 1 oder 2,
**gekennzeichnet durch** bevorzugt berührungslos wirkende Mittel (17) zum Erfassen einer Reifentemperatur, die den Reifendruck-Erfassungsmitteln (14) zur Temperaturkompensation der Messung des Reifendrucks zugeordnet sind und die Temperaturerfassung während desselben Bewegungs- und/oder Überfahrvorgangs des Fahrzeugs ausführen.

4. Vorrichtung nach einem der Ansprüche 1 bis 3,
**gekennzeichnet durch** eine Fahrzeugidentifikationseinheit, die zum Erfassen einer Fahrzeugidentifikation, insbesondere mindestens eines Fahrzeug-Nummernschildes, vor, während oder nach dem Bewegungs- und/oder Überfahrvorgangs des Fahrzeugs ausgebildet ist und bevorzugt der Messanordnung zugeordnet ist.

5. Vorrichtung nach Anspruch 4,
**dadurch gekennzeichnet,**
**dass** die Fahrzeugidentifikationseinheit optische Bilderfassungsmittel aufweist, die zum Erfassen mindestens eines der amtlichen Kennzeichen des Fahrzeugs sowie zum Erzeugen von elektronisch verarbeitbaren Fahrzeugidentifikationsdaten daraus ausgebildet sind.

6. Vorrichtung nach einem der Ansprüche 1 bis 5,
**gekennzeichnet durch** eine elektronische, mit den Ausgabemitteln zusammenwirkende Datenbankeinheit für einer Fahrzeugidentifikation des Fahrzeugs zuordenbare Fahrzeughalterdaten und/oder Fahrzeugparameterdaten.

7. Vorrichtung nach Anspruch 6,
**dadurch gekennzeichnet,**
**dass** die Datenbankeinheit zum Ablegen und/oder Speichern der Ergebnisse der Messung für ein identifiziertes Fahrzeug ausgebildet sind.

8. Vorrichtung nach einem der Ansprüche 1 bis 7,
**gekennzeichnet durch** den Ausgabemitteln zugeordnete Transaktionsmittel zum Durchführen eines Bezahl- und/oder Freigabevorgangs, die so ausgebildet sind, dass vorbestimmte Formate und/oder Ausgabeformen der Ergebnisse der Messung erst nach Abschluss einer Bezahltransaktion oder einer elektronischen Freigabetransaktion erzeugt, angezeigt oder
übertragen werden.

9. Vorrichtung nach Anspruch 8,
**dadurch gekennzeichnet,**
**dass** die Formate bzw. Ausgabeformen Mobilfunkdatenformate, E-Mail-Datenformate, Fax-Datenformate oder einen Ausdruck auf einem physischen Träger einschließen.

10. Vorrichtung nach einem der Ansprüche 6 bis 9,
**dadurch gekennzeichnet,**
**dass** die Reifendruck-Erfassungsmittel, die Reifenprofiltiefe-Erfassungsmittel sowie die Ausgabe mittel eine lokale und clientseitige Mess- und Verarbeitungseinheit ausbilden, an welche die Datenbankeinheit serverseitig im Rahmen eines Client-Server-Systems über das elektronische Datenübertragungsnetz angebunden und lokal zugreifbar ist.

11. Vorrichtung nach Anspruch 10,
**dadurch gekennzeichnet,**
**dass** die Transaktionsmittel in das Client-Server-System eingebunden sind.

12. Vorrichtung nach Anspruch 10 oder 11,
**dadurch gekennzeichnet,**
**dass** das Client-Server-System so ausgebildet ist, dass eine clientseitig vorgesehene Abfrageeinheit, bevorzugt nach Durchführung eines Authentifizierungsvorgangs, Zugriff auf die in der Datenbankeinheit fahrzeugspezifisch gespeicherten Ergebnisse der Messung nehmen kann.

13. Vorrichtung nach einem der Ansprüche 1 bis 10,
**dadurch gekennzeichnet,**
**dass** die Ausgabemittel zum Erzeugen und Ausgeben eines durch die Bedienperson visuell und/oder akustisch erfassbaren Schwellwertsignals ausgebildet sind, dass das Ergebnis der Messung des Reifendrucks und der Reifenprofiltiefe relativ zu vorbestimmten Schwellwerten einordnet und in datenmäßig reduzierter Form, insbesondere in digitaler und/oder Ampelform, wiedergibt.

14. Vorrichtung nach einem der Ansprüche 1 bis 10,
**dadurch gekennzeichnet,**
**dass** die Ausgabemittel eine Druckereinheit zum Erzeugen einer Ausgabe der Ergebnisse der Messung auf einem Papier- oder Kunststoffträger aufweisen.

15. Verfahren zum Messen und Ausgeben von Reifenparametern eines Fahrzeugs, die einen Reifendruck und eine Reifenprofiltiefe beinhalten und/oder berücksichtigen, insbesondere Verfahren zum Betreiben der Vorrichtung nach einem der Ansprüche 1 bis 14,
**gekennzeichnet durch** die Schritte:
- Erfassen eines Reifendrucks des Fahrzeugs während des sich bewegenden Fahrzeugs,
- Erfassen einer Reifenprofiltiefe des Fahrzeugs während des sich bewegenden Fahrzeugs,
- Ausgeben eines Ergebnisses der Erfassungen,
**dadurch** gekennzeichnet, dass
- das Erfassen des Reifendrucks und das Erfassen der Reifenprofiltiefe während desselben Bewegungsvorgangs des Fahrzeugs, insbesondere eines Überfahrens einer Messanordnung, und **durch** gemeinsame Nutzung von optischen Messmitteln (16) für beide Messvorgänge erfolgt
- und das Ausgeben so erfolgt, dass eine das Fahrzeug führende Bedienperson das Ergebnis im Fahrzeug oder aus dem Fahrzeug heraus erfassen kann
und/oder das Ergebnis der Messung mittels eines elektronischen, insbesondere öffentlichen Datenübertragungsnetzes an eine Datenempfängereinheit erfolgt.

## Claims

1. A device for measuring tyre parameters of a vehicle with means (14) for detecting a tyre pressure of the vehicle, means for detecting a tyre profile depth (20) of the vehicle and means (26) for outputting measured tyre parameters that include and/or take into account the tyre pressure and the tyre profile depth, wherein the tyre pressure detecting means (14) and the tyre profile depth detecting means (20) have a measuring arrangement which is designed to be driven over by the vehicle and which is configured to measure the tyre pressure and the tyre profile depth in a moving vehicle, and the output means (26) are designed to display a result of the measurement such that an operator driving the vehicle can detect said measurement in the vehicle or from the vehicle directly after driving over said arrangement and/or the output means (26) are designed to transmit the result of the measurement to a data receiving unit by means of an electronic data transmitting network which is public in particular,
**characterized in that**
the tyre pressure detecting means and the tyre profile depth detecting means are designed so that the measuring of the tyre pressure and the measuring of the tyre profile depth takes place by shared use of optical measuring means (16) for both measuring processes.

2. The device according to Claim 1,
**characterized in that**
the tyre pressure detecting means and the tyre profile depth detecting means are designed so that the measuring of the tyre pressure and the measuring of the tyre profile depth takes place during the same movement- and/or drive-over process of the vehicle via the shared measuring arrangement.

3. The device according to Claim 1 or 2,
**characterized by** means (17) for detecting a tyre temperature, preferably acting in a contactless manner, which are associated with the tyre pressure detecting means (14) for temperature compensation of the measurement of the tyre pressure and which carry out the temperature detection during the same movement- and/or drive-over process of the vehicle.

4. The device according to one of Claims 1 to 3,
**characterized by** a vehicle identification unit which is designed for detecting a vehicle identification, in particular at least a vehicle number plate before, during or after the movement- and/or drive-over process of the vehicle and is preferably associated with the measuring arrangement.

5. The device according to Claim 4,
**characterized in that**
the vehicle identification unit has optical image detecting means which are designed for detecting at least one of the official distinguishing marks of the vehicle and for generating electronically processable vehicle identification data therefrom.

6. The device according to one of Claims 1 to 5, **characterized by** an electronic database unit, cooperating with the output means, for vehicle keeper data and/or vehicle parameter data which are able to be associated with a vehicle identification of the vehicle.

7. The device according to Claim 6,
**characterized in that**
the database unit is designed for the depositing and/or storing of the results of the measurement for an identified vehicle.

8. The device according to one of Claims 1 to 7,
**characterized by** transaction means associated with the output means for carrying out a payment and/or clearance process, which are designed so that predetermined formats and/or output forms of the results of the measurement are produced, displayed or transmitted only after completion of a payment transaction or an electronic clearance transaction.

9. The device according to Claim 8,
**characterized in that**
the formats or respectively output forms include mobile ratio data formats, email data formats, fax data formats or a printout on a physical medium.

10. The device according to one of Claims 6 to 9,
**characterized in that**
the tyre pressure detecting means, the tyre profile depth detecting means and the output means form a local and client-end measuring and processing unit, to which the database unit is linked and is able to be accessed locally at the server end via the electronic data transmission network within a client-server system.

11. The device according to Claim 10,
**characterized in that**
the transaction means are integrated into the client-server system.

12. The device according to Claim 10 or 11,
**characterized in that**
the client-server system is designed so that an interrogation unit provided at the client end can access the results of the measurement stored on a vehicle-specific basis in the database unit, preferably after carrying out an authentication process.

13. The device according to one of Claims 1 to 10,
**characterized in that**
the output means are designed for generating and outputting a threshold value signal which is able to be detected visually and/or acoustically by the operator, which classifies the result of the measurement of the tyre pressure and of the tyre profile depth relative to predetermined threshold values and reproduces it in a reduced form with regard to data, in particular in a digital and/or traffic-light form.

14. The device according to one of Claims 1 to 10,
**characterized in that**
the output means have a printer unit for producing an output of the results of the measurement on a paper or plastic medium.

15. A method for measuring and outputting tyre parameters of a vehicle, which contain and/or take into consideration a tyre pressure and a tyre profile depth, in particular a method for operating the device according to one of Claims 1 to 14,
**characterized by** the steps:
- detecting a tyre pressure of the vehicle whilst the vehicle is moving,
- detecting a tyre profile depth of the vehicle whilst the vehicle is moving,
- outputting a result of the detections,
**characterized in that**
- the detecting of the tyre pressure and the detecting of the tyre profile depth takes place during the same movement process of the vehicle, in particular a driving over of a measuring arrangement, and by shared use of optical measuring means (16) for both measuring processes
- and the outputting takes place such that an operator driving the vehicle can detect the result in the vehicle or from the vehicle and/or the result of the measurement is effected to a data receiver unit by means of an electronic, in particular public, data transmission network.

## Revendications

1. Dispositif de mesure des paramètres d'un pneu d'un véhicule, le dispositif présentant
des moyens (14) de saisie de la pression du pneu du véhicule, des moyens de saisie de la profondeur (20) du profil du pneu du véhicule et des moyens (26) qui délivrent les paramètres, mesurés sur le pneu, qui contiennent et/ou tiennent compte de la pression du pneu et de la profondeur du profil du pneu,
les moyens (14) de saisie de la pression de pneu et les moyens (20) de saisie de la profondeur du profil du pneu présentant un ensemble de mesure configuré pour que le véhicule y roule et configuré pour mesurer la pression du pneu ainsi que la profondeur du profil du pneu sur le véhicule en déplacement,
les moyens de sortie (26) qui affichent un résultat de la mesure étant configurés de telle sorte qu'un opérateur qui conduit le véhicule puisse détecter ce résultat dans le véhicule ou hors du véhicule immédiatement après le passage sur l'ensemble et/ou les moyens de sortie (26) étant configurés pour transmettre le résultat de la mesure au moyen d'un réseau électronique de transfert de données, en particulier un réseau public, à une unité de réception de données, **caractérisé en ce que**
les moyens de saisie de la pression du pneu et les moyens de saisie de la profondeur du profil du pneu sont configurés de telle sorte que la mesure de la pression du pneu ainsi que la mesure de la profondeur du profil du pneu s'effectuent en utilisant conjointement des moyens optiques de mesure (16) pour les deux opérations de mesure.

2. Dispositif selon la revendication 1, **caractérisé en ce que** les moyens de saisie de la pression du pneu et les moyens de saisie la profondeur du profil du pneu sont configurés de telle sorte que la mesure de la pression du pneu et la mesure de la profondeur du profil du pneu s'effectuent pendant la même opération de déplacement et/ou de passage du véhicule au-dessus de l'ensemble de mesure commun.

3. Dispositif selon les revendications 1 ou 2, **caractérisé par** des moyens (17) de saisie de la température du pneu agissant de préférence sans contact et associés aux moyens (14) de saisie de la pression du pneu en vue de compenser la température de la mesure de la pression du pneu, et qui exécutent la saisie de température pendant la même opération de déplacement et/ou de passage du véhicule.

4. Dispositif selon l'une des revendications 1 à 3, **caractérisé par** une unité d'identification de véhicule qui est configurée pour saisir l'identification d'un véhicule, en particulier au moins le numéro de la plaque d'immatriculation du véhicule, pendant ou après l'opération de déplacement et/ou de passage du véhicule, l'unité étant de préférence associée à l'ensemble de mesure.

5. Dispositif selon la revendication 4, **caractérisé en ce que** l'unité d'identification de véhicule présente des moyens optiques de saisie d'image qui sont configurés pour saisir au moins la plaque d'immatriculation du véhicule ainsi que pour former des données d'identification du véhicule aptes à être traitées électroniquement.

6. Dispositif selon l'une des revendications 1 à 5, **caractérisé par** une unité électronique de base de données qui coopère avec les moyens de sortie et qui permet l'identification de données du détenteur du véhicule qui peuvent être associées à l'identification du véhicule et/ou des données de paramètres du véhicule.

7. Dispositif selon la revendication 6, **caractérisé en ce que** l'unité de base de données est configurée pour placer et/ou conserver les résultats de la mesure pour un véhicule identifié.

8. Dispositif selon l'une des revendications 1 à 7, **caractérisé par** des moyens de transaction, associés aux moyens de sortie, qui exécutent une opération de comptage et/ou de libération, qui sont configurés de manière à ne former, afficher ou transférer des formats prédéterminés et/ou des formulaires de sortie des résultats de la mesure qu'après la conclusion d'une transaction de paiement ou d'une transaction électronique de libération.

9. Dispositif selon la revendication 8, **caractérisé en ce que** les formats ou formulaires de sortie comprennent des formats de données de téléphonie radio, des formats de données d'e-mail, des formats de données de fax ou une impression sur un support physique.

10. Dispositif selon l'une des revendications 6 à 9, **caractérisé en ce que** les moyens de saisie de la pression du pneu, les moyens de saisie de la profondeur de profil du pneu ainsi que les moyens de sortie forment une unité-client locale de mesure et de traitement à laquelle l'unité de base de données est raccordée côté serveur dans le cadre d'un système client-serveur, et raccordée et accessible localement par l'intermédiaire du réseau électronique de transfert de données.

11. Dispositif selon la revendication 10, **caractérisé en ce que** les moyens de transaction sont incorporés dans le système client-serveur.

12. Dispositif selon les revendications 10 ou 11, **caractérisé en ce que** le système client-serveur est configuré de manière à ce qu'une unité d'interrogation prévue côté client puisse avoir accès au résultat de la mesure conservé spécifiquement au véhicule dans l'unité de base de données, de préférence après l'exécution d'une opération d'authentification.

13. Dispositif selon l'une des revendications 1 à 10, **caractérisé en ce que** les moyens de sortie sont configurés pour former et délivrer un signal de valeur de seuil qui peut être saisi visuellement et/ou acoustiquement par l'opérateur, **en ce que** le résultat de la mesure de la pression du pneu et de la profondeur de profil du pneu est ordonné par rapport à des valeurs de seuil prédéterminées et est reproduit sous forme de données réduites, en particulier sous forme numérique et/ou de lampe de signalisation.

14. Dispositif selon l'une des revendications 1 à 10, **caractérisé en ce que** les moyens de sortie présentent une unité d'imprimante qui forme une sortie des résultats de la mesure sur un support en papier ou en matière synthétique.

15. Procédé de mesure et de fourniture de paramètres de pneu d'un véhicule, qui contiennent la pression du pneu et la profondeur de profil du pneu et/ou en tiennent compte, et en particulier procédé en vue de conduire le dispositif selon l'une des revendications 1 à 14, le procédé étant **caractérisé par** les étapes suivantes :
saisie de la pression du pneu du véhicule pendant que le véhicule se déplace,
saisie de la profondeur de profil du pneu du véhicule pendant que le véhicule se déplace et
fourniture du résultat des saisies,
**caractérisé en ce que**
la saisie de la pression du pneu et la saisie de la profondeur de profil du pneu s'effectuent pendant une même opération de déplacement du véhicule, en particulier le passage sur un ensemble de mesure et par utilisation conjointe de moyens de mesure optique (16) pour les deux opérations de mesure et
**en ce que** la sortie s'effectue de telle sorte qu'un opérateur qui conduit le véhicule puisse saisir le résultat dans le véhicule ou hors du véhicule, et/ou
**en ce que** le résultat de la mesure est transmis à une unité de réception de données au moyen d'un réseau électronique de transfert de données, en particulier un réseau public.
